(19) Europäisches Patentamt
European Patent Office
Office européen des brevets

(11) **EP 0 727 397 B1**

(12) **EUROPÄISCHE PATENTSCHRIFT**

(45) Veröffentlichungstag und Bekanntmachung des Hinweises auf die Patenterteilung:
**18.11.1998 Patentblatt 1998/47**

(51) Int. Cl.⁶: **C03C 17/25**, C03C 17/34, C03C 17/42

(21) Anmeldenummer: 96101497.4

(22) Anmeldetag: 02.02.1996

(54) **Verfahren zur Heissendvergütung von Hohlglaskörpern durch Aufbringen von Metallverbindungen auf die heisse äussere Glasoberfläche**

Method for hot end coating of hollow glassware by deposition of metal compounds on the hot outer glass surface

Méthode de revêtement à chaud d'articles creux en verre par dépôt de composés métalliques sur la surface extérieure chaude du verre

(84) Benannte Vertragsstaaten:
**AT BE CH DE ES FR GB IT LI NL**

(30) Priorität: **15.02.1995 DE 19504906**

(43) Veröffentlichungstag der Anmeldung:
**21.08.1996 Patentblatt 1996/34**

(73) Patentinhaber:
**Th. Goldschmidt AG**
**45127 Essen (DE)**

(72) Erfinder:
• **Eisen, Heinz-Günter**
**D-45307 Essen (DE)**
• **Krohm, Hans-Günter**
**D-46348 Raesfeld (DE)**

• **Vallerien, Sven-Uwe, Dr.**
**D-45239 Essen (DE)**

(56) Entgegenhaltungen:
EP-A- 0 486 475        EP-A- 0 701 977
WO-A-93/12892        WO-A-93/12934
WO-A-93/13393

• **CHEMICAL ABSTRACTS, vol. 99, no. 2, 11.Juli 1983 Columbus, Ohio, US; abstract no. 9757d, Seite 239; XP002010944 & JP-A-05 809 847 (ISHIZUKA GLASS CO. LTD.) 20.Januar 1983**
• **DATABASE WPI Week 12 Derwent Publications Ltd., London, GB; AN 82-23578 XP002010945 & SU-A-833 649 (NW CORRESP POLY) , 5.Juni 1981**

**Beschreibung**

Die Erfindung betrifft ein Verfahren zur Heißendvergütung von Hohlglaskörpern durch Aufbringen von gegebenenfalls in organischen Lösungsmitteln und/oder Wasser gelösten Metallverbindungen auf die auf 500 bis 600 °C heiße äußere Oberfläche von Hohlglaskörpern, wobei die Metallverbindungen unter Ausbildung dünner Metalloxidschichten pyrolysieren, und gegebenenfalls nachfolgende Aufbringung weiterer Schichten durch übliche Heiß- und Kaltendvergütung.

Bei der Heißendvergütung von Hohlglas werden in der Regel Zinnoxidschichten bis zu einer Schichtdicke von ca. 15 nm auf die Glasoberflächen aufgetragen. Diese Schichten dienen als Haftvermittler für die bei einer anschließenden Kaltendvergütung aufgebrachten Wachsschichten. Diese dünnen Filme aus Naturwachs oder synthetischen Wachsen sind durchsichtig und schützen die Glasbehälter gegen Abrieb und Verkratzen (Kaltendvergütung).

Die Zinnoxidschichten werden durch Pyrolyse von Zinnverbindungen auf den heißen Glasoberflächen erzeugt. Dabei können die Zinnverbindungen entweder als Dampf oder als Spray, der eine gelöste Zinnverbindung enthält, aufgebracht werden.

In der US-C-3 414 429 wird ein Verfahren beschrieben, in dem diese Schichten aus Zinn-IV-halogeniden, wie z. B. Zinntetrachlorid, erzeugt werden. Verbindungen dieses Typs hydrolysieren leicht in Anwesenheit von Feuchtigkeitsspuren. Dabei entstehen stark korrosive Verbindungen. Des weiteren ist die Ausbeute bei dem Aufbau der Schicht nur gering. Da der nicht zum Schichtaufbau verwendete Anteil der Zinn-IV-halogenide nicht ohne größeren Aufwand zurückgeführt werden kann, ist dieses Verfahren deshalb nur bedingt geeignet. Außerdem führt der spontane Zerfall des Zinntetrachlorids zu einem ungleichmäßigen Schichtaufbau, der sich durch optisch störende Interferenzen bemerkbar macht.

Zinn-IV-chlorid enthält pro Atom Zinn vier Atome Chlor und ist meist bei der technischen Anwendung zudem noch mit zusätzlichem Chlorwasserstoff stabilisiert. Hauptnachteil dieses Systems ist der hohe Chlorgehalt. Bei der thermischen Zersetzung bildet sich Chlorwasserstoffgas, welches Gesundheitsgefährdungen verursachen und Materialien angreifen oder beschädigen kann.

Aus der DE-C-25 41 710 ist ein Verfahren bekannt, bei dem die Zinn-IV-oxid-Schicht durch Pyrolyse von Monoorganozinntrichlorid der allgemeinen Formel $RSnCl_3$, wobei R eine Alkylgruppe mit einem bis acht Kohlenstoffatomen darstellt, auf der heißen Glasoberfläche erzeugt wird. Die Verbindungen werden dabei entweder verdampft oder aufgesprüht. Bevorzugt wird Monobutylzinntrichlorid eingesetzt. Im Hinblick auf die Schadstoffemission ist hierbei nachteilig, daß je Zinnatom drei Chloratome frei werden und entsorgt werden müssen.

Verwendet man Zinn-II-chlorid, so verbessert sich zwar rechnerisch das Verhältnis von Zinn zu Chlor, wegen der geringen hydrolytischen Stabilität der wäßrigen Lösungen des Zinn-II-chlorids muß jedoch diesen Lösungen wieder Chlorwasserstoff zugesetzt werden. Es bleibt wieder das Problem erhöhter Korrosion der apparativen Teile durch die stark salzsaure Lösung.

In der EP-A 0 485 646 wird ein Verfahren zur Heißendvergütung von Hohlglaskörpern auf der Basis von Zinn(IV)- oder auch Silicium(IV)-chlorid beschrieben.

In der DE-A-41 24 136 wird ein Verfahren beschrieben, bei dem Hohlglaskörper durch Aufsprühen einer Lösung, die 100 bis 1000 g/l $(OH)_2SnCl_2$ enthält, vergütet werden. Dabei können bis zu 50 Mol-% der Verbindung durch äquimolare Mengen der allgemeinen Verbindung $(HO)_xSn(C_2O_4)_y$, in der x einen Wert von 0,2 bis 3,8, y einen Wert von 1,9 bis 0,1 hat und $(2y+x) = 4$ ist, ersetzt werden. Selbst damit kann jedoch nur ein Zinn/Chlor-Verhältnis von bestenfalls angenähert 1 erreicht werden.

In der EP-A-0 701 977 (St.d.T. gemäß Artikel 54(3)EPÜ) wird eine Beschichtungszusammensetzung zur Erzeugung von Zinnoxidschichten auf Glas beschrieben, die aus 4 bis 35 Gewichtsteilen einer oder mehrerer Siliciumverbindungen, 1 bis 27 Gewichtsteilen einer oder mehrerer Borverbindungen, 8 bis 43 Gewichtsteilen einer oder mehrerer Zinnverbindungen, 0 bis 35 Gewichtsteilen einer oder mehrerer Phosphorverbindungen sowie 30 bis 86 Gewichtsteilen eines organischen Lösungsmittels und/oder Wasser besteht.

Zinndioxid lagert sich unter den bei der Heißendvergütung vorliegenden Konditionen als Zersetzungsprodukt von beispielsweise Monobutylzinntrichlorid als ca. 10 bis 15 nm dicke Schicht auf der Glasoberfläche der Hohlglaskörper ab. Diese Schicht zeigt keine geschlossene Struktur, sondern besteht aus kugelförmigen Partikeln, die die Glasoberfläche nur abdecken. Diese an sich relativ alkaliresistente Schicht wird unter Wascheinwirkung alkalischer Medien (wie z. B. Natronlauge) von der Glasoberfläche abgelöst. Der Grund dafür liegt in der Migration der Waschlauge durch die nicht vollständig geschlossene Zinndioxidschicht. Auf diesem Wege gelangt NaOH zur Glasoberfläche und zerstört hier lokal die Silikatstruktur an der Grenzfläche Glas/$SnO_2$. Hierbei kommt es schon nach wenigen Wäschen zur vollständigen Ablösung der Zinnoxidschicht vom Glasuntergrund. Dieser Effekt ist belegbar durch Untersuchungen an unterschiedlich dicken Zinndioxidschichten. Ab einer Dicke von etwa 15 nm reicht die ablösende Wirkung der gebräuchlichen 2 % NaOH nicht mehr aus, und es kommt nur zu einem Teilangriff des Glas/$SnO_2$-Bereichs und dadurch zu sichtbaren, optischen Irisationen. Kurzzeitig läßt sich der Laugenangriff zwar durch das Aufbringen einer Wachsschicht auf die Heißendvergütungsschicht vermindern. Diese Wachsschicht übersteht jedoch nur wenige (etwa 2 bis höchstens 5) alkalische Wäschen.

Die schützende Funktion der Heißend-$SnO_2$-

Schicht beruht u. a. auf der haftvermittelnden Wirkung für die anschließend aufgebrachte Kaltendvergütung, die in der Regel heute aus synthetischen Wachsen besteht. Sie versieht den Hohlglaskörper mit den erwünschten Eigenschaften Glätte und Kratzfestigkeit. Infolge der Ablösung der Heißendvergütung durch den Waschlaugenangriff geht auch die schützende Wirkung der Kaltendvergütung verloren.

Die vorliegende Erfindung befaßt sich daher mit dem Problem, Mittel zur Heißendvergütung von äußeren Hohlglasoberflächen zu finden, die

- leicht herstellbar und handhabbar sind,
- bei der Verarbeitung möglichst wenig korrodierende Emissionen erzeugen,
- möglichst homogene Schichten erzeugen,
- die Aufbringung relativ dicker Schichten, möglichst ohne Irisationserscheinungen, erlauben,
- die Glasoberfläche vor dem Angriff alkalischer Medien schützen,
- Schichten erzeugen, die als stabilisierende Grundlage für weitere im Wege der Heiß- und Kaltendvergütung aufgebrachte Schichten dienen
- und in einem einfachen und kostengünstigen Verfahren aufgebracht werden können.

Mittel und Verfahren werden durch die vorliegende Erfindung bereitgestellt.

Gegenstand der Erfindung ist somit ein Verfahren zur Heißendvergütung von Hohlglaskörpern, welches dadurch gekennzeichnet ist, daß man auf die zu beschichtende heiße Oberfläche

- eine Lösung von Bor-, Silicium-, Zinn- und gegebenenfalls Phosphorverbindungen in Wasser und/oder organischen Lösungsmitteln aufbringt und daraus pyrolytisch eine Schicht aus Oxiden dieser Elemente erzeugt und gegebenenfalls

- auf diese Schicht in an sich bekannter Weise weitere Schichten im Verfahren der Heißend- und/oder Kaltendvergütung aufbringt.

Bevorzugt wird dabei die erste Schicht in einer Dicke von 5 nm bis 300 nm aufgebracht, wobei für beide Schichten eine Gesamtschichtdicke von 10 nm bis 300 nm vorteilhaft ist.

Als siliciumhaltige Verbindungen sind dabei insbesondere geeignet:

Kieselsäuretetraethylester, Polydimethylsiloxane mit einer mittleren Kettenlänge bis zu 100 Monomereinheiten sowie alkylmodifizierte Derivate sowie sie enthaltende Copolymere, cyclische Polydimethylsiloxane, Hexafluorokieselsäure oder auch Mischungen dieser Substanzen.

Als borhaltige Verbindungen sind beispielsweise geeignet:

Borsäure, Trimethylborat, Triethylborat, Tripropylborat oder Tributylborat, Hexafluoroborsäure sowie Mischungen dieser Verbindungen.

Als zinnhaltige Verbindungen sind beispielsweise geeignet:

Zinntetrachlorid, Alkylzinntrichlorid (z. B. Monobutylzinnchlorid), Dialkylzinndichlorid (z. B. Dibutylzinndichlorid), Monoalkylzinnoxid (z.B. Monobutylzinnoxid), Dialkylzinnoxid (z. B. Dibutylzinnoxid), Monoalkylzinntricarboxylate (Monobutylzinnacetat), Dialkylzinndicarboxylate (z. B. Dibutylzinnacetat), Trialkylzinncarboxylat (Tributylzinnacetat), wäßrige, alkoholische oder ketonische Zinn(IV)säuresole oder Mischungen o.g. zinnhaltiger Verbindungen.

Als Phosphorverbindungen sind beispielsweise geeignet:

Phosphorige Säure und ihre Di- und Trialkylester (Methyl, Ethyl, Butyl und Octyl), Orthophosphorsäure und ihre Alkylester (Methyl, Ethyl, Butyl und Octyl), lineare und cyclische Polyphosphate, oder auch Mischungen o.g. phosphorhaltiger Verbindungen.

Als organische Lösungsmittel kommen in Frage:

Alkohole (Methanol, Ethanol, Isopropanol, Butanol), Ketone (Aceton, Methylethylketon, Methylisobutylketon), Ester (Essigsäureethylester, Essigsäurebutylester) und/oder Wasser.

Die erfindungsgemäßen Mittel lassen sich im allgemeinen auf einfache Weise herstellen und liegen als stabile, einfach zu handhabende Lösungen vor. Durch ihren geringen Gehalt an Halogeniden werden bei ihrer Auftragung auf die heiße Glasoberfläche erheblich weniger korrodierende Nebenprodukte als bei den Mitteln des Standes der Technik erzeugt.

Die Mittel erlauben die Herstellung von oxidischen Schichten, die deutlich alkalibeständiger als konventionelle, bei der Heißendvergütung aufgebrachte Zinnoxidschichten sind.

Dabei ist die Aufbringung relativ dicker Schichten bis zu 300 nm möglich, ohne daß es zu unerwünschten optisch beeinträchtigenden Erscheinungen, wie Irisation, kommt.

Überraschend wurde ferner gefunden, daß, im Gegensatz zu den herkömmlichen Zinnoxidschichten, die erfindungsgemäß erzeugten Oxidschichten die Glasoberfläche so gut abdecken, daß die Möglichkeit einer Schädigung durch alkalische Medien ausgeschlossen oder zumindest erheblich erschwert wird.

Damit eröffnet sich die Möglichkeit, die erfindungsgemäß erzeugte Oxidschicht als Primerschicht für weitere im Heißendverfahren aufzutragende Schichten einzusetzen. So ist eine auf die Primerschicht aufgetragene herkömmliche Zinnoxidschicht zuverlässig vor der oben dargestellten Ablösung geschützt. Auf diese Weise behält die Zinndioxidschicht auch unter alkalischen Wascheinflüssen ihre eigene schützende Wirkung und bleibt auch im Mehrwegbereich nutzbar.

Überdies ist eine derartige Primerschicht in der Lage, durch die Zinnoxidschicht hervorgerufene Irisationserscheinungen erheblich zu dämpfen oder zu unterbinden.

Damit ist eine derartige erfindungsgemäß erzeugte Primerschicht eine ausgezeichnete Grundlage für weitere Schichten, insbesondere auch für die im Kaltendverfahren aufgebrachten Wachsschichten.

Aufgrund der Tatsache, daß es sich bei den erfindungsgemäßen Mitteln um einfach zu handhabende untoxische Lösungen handelt, ist das erfindungsgemäße Verfahren zur Heißendvergütung von Hohlglaskörpern einfach zu betreiben. Es ermöglicht insbesondere die Einhaltung der Arbeitsschutzbestimmungen in der Glashütte und verringert durch die mögliche Vermeidung von Chlorid, das bei der pyrolytischen Zersetzung in Chlorwasserstoff übergeht, die gesundheitliche Belastung des Personals und den Angriff oder die Beschädigung von Materialien.

Bei der Auswahl der Verbindungen ist die Verträglichkeit der Komponenten untereinander zu beachten. Die technischen Bedingungen, wie z. B. Sprühapparatur, Glastemperatur oder Produktionsgeschwindigkeit, bestimmen die Art und Konzentration der eingesetzten Stoffe in dieser Primerlösung.

Phosphorverbindungen müssen nicht in jedem Fall zugesetzt werden, jedoch empfiehlt sich deren Zugabe bei chemischer Verträglichkeit. Insbesondere bei Dialkylzinnverbindungen sind unerwünschte chemische Reaktionen möglich. Die Anwesenheit der Phosphorverbindung ist wünschenswert, um eine optimale Wirkung bei der Irisationsdämpfung zu erhalten, ist jedoch nicht in jedem Fall zwingend.

Die Zubereitung der Lösung erfolgt in einfacher Weise durch Mischung in einem geeigneten Rührgefäß, wobei darauf zu achten ist, daß sich die Lösung nicht zu sehr erhitzt und keine Ausfällungen auftreten. Idealerweise sollte die Temperatur deutlich unterhalb des Siedepunktes des Lösemittels gehalten werden.

Die Anteile der Lösungskomponenten können, wie angegeben, in einem weiten Bereich schwanken. Die Bestandteile müssen jedoch jeweils in ausreichendem Maße enthalten sein, um den Ansprüchen einer technischen Applikation, wie z. B. Dosierbarkeit und Versprühbarkeit, zu genügen.

Die Auswahl richtet sich dabei nach der Art und Zusammensetzung des zu beschichtenden Substrats und den technischen Beschichtungsbedingungen. Die Auswahl der Komponenten für die Sprühlösung richtet sich ferner insbesondere danach, daß der Brechungsindex der aus dieser Lösung erhaltenen metalloxidischen Schicht zwischen dem Wert des Brechungsindex des verwendeten Substrats und der anschließenden Zinnoxidschicht liegt, falls eine anschließende zusätzliche Beschichtung mit Zinnoxid verwendet wird. Für die Beschichtung von kommerziellem Kalknatronglas empfiehlt sich z. B. die Erzielung eines Brechungsindex der metalloxidischen Zwischenschicht zwischen Werten von 1,65 und 1,72. Dies gewährleistet bei Verwendung einer Zinnoxidschicht eine optimale Dämpfung der optischen Irisation.

Geeignete Lösungen sind beispielsweise:

1. 11 - 18,5 % Dibutylzinndiacetat
12 - 8 % Borsäure
16,6 - 9,5 % Tegopren® 5863 (Produkt der Th. Goldschmidt AG: Polyether-Polydimethylsiloxan-Copolymer)
60,4 - 64 % Ethanol

2. 11 - 18,5 % Dibutylzinndiacetat
29,7 - 44,6 % Borsäuretributylester
4,8 - 8,3 % Tegiloxan® 3 (Produkt der Th. Goldschmidt AG: Polydimethylsiloxan)
54,5 - 28,6 % Essigsäureethylester

3. 9,6 - 14,7 % Butylzinntrichlorid
29,7 - 44,6 % Borsäuretributylester
16,6 - 9,5 % Tegopren® 5863
44,1 - 31,2 % Ethanol

4. 9,6 - 14,7 % Butylzinntrichlorid
12 - 8 % Borsäure
16,6 - 9,5 % Tegopren® 5863
Rest $H_2O$

Die Homogenität der Oberflächenbeschichtung von Hohlglasbehältern wird durch tunnelförmige Bedampfungshauben, durch die sich in Längsrichtung ein Förderband für den Transport der Glasbehälter erstreckt, gewährleistet. Innerhalb dieser Bedampfungshaube bildet sich mindestens ein mit dem Beschichtungsmittel angereicherter Luftkreislauf aus. Derartige Bedampfungshauben sind Stand der Technik und z. B. in der EP-A-0 103 109, EP-A-0 378 116 und DE-C-37 27 632 beschrieben.

Das erfindungsgemäße Verfahren soll durch das folgende Beispiel näher erläutert werden. Dabei wird zunächst die Bildung der Zwischenschicht, bestehend aus den Metalloxiden, und darauf aufbauend die Ausbildung der Zinnoxidschicht auf der äußeren Oberfläche von Flaschen gezeigt, und es werden die Schichtdicke und Gleichmäßigkeit der erhaltenen Zinnoxidschichten untersucht.

Beispiel

a) Herstellung der Zinn-IV-oxid-Schicht

Nicht beschichtete 250-ml-Weißglasflaschen werden in einem Muffelofen auf 560 °C erwärmt. Nach Entnahme der Flasche aus dem Temperierofen wird diese aus ca. 35 cm Entfernung mit der Versuchslösung, bestehend aus den genannten Metallverbindungen:

8,7 % Borsäure
5 % Dimethylformamid
5 % Tegiloxan® 3
11,3 % Dibutylzinndiacetat
70 % Ethanol

besprüht und anschließend bedampft oder auch besprüht unter Verwendung einer Lösung, die Monobutylzinntrichlorid in Ethanol (Zinngehalt 220 g/l) gelöst enthält. Ein heißer Luftstrom wird über diese Lösung geführt. Die Temperatur des Luftstroms beträgt etwa 280 °C, die Bedampfungsdauer 8 Sekunden.

Die Flasche wird hierbei am Flaschenhals gehalten und führt eine Rotationsbewegung von etwa 60 U/min aus.

Nach der Beschichtung werden die Flaschen sofort in den auf 560 °C erwärmten Muffelofen zurückgestellt und über einen Zeitraum von 12 Stunden kontinuierlich auf Raumtemperatur abgekühlt.

b) Bestimmung der Schichtdicke der Vergütungsschicht

Die Bestimmung der Zinn-IV-oxid-Schicht auf der Glasoberfläche erfolgt mit einem HOT END COATING METER der Firma AGR. Bei diesem Meßverfahren handelt es sich um eine Infrarotreflexionsmessung. Die Messung wird vom Flaschenboden aus in verschiedenen Höhen (1; 1,5; 2; 2,5; 3; 3,5 Zoll, gemessen vom Flaschenboden) des Flaschenmantels durchgeführt. Das Meßgerät tastet in jeder dieser Höhen den gesamten Flaschenumfang ab.

Die Verwendung von technischen Heißendvergütungshauben in den Glashütten gewährleistet eine gleichmäßige Oberflächenbeschichtung zur Erreichung einer Zinnoxidschicht bei Verdampfung unter realen Produktionsbedingungen.

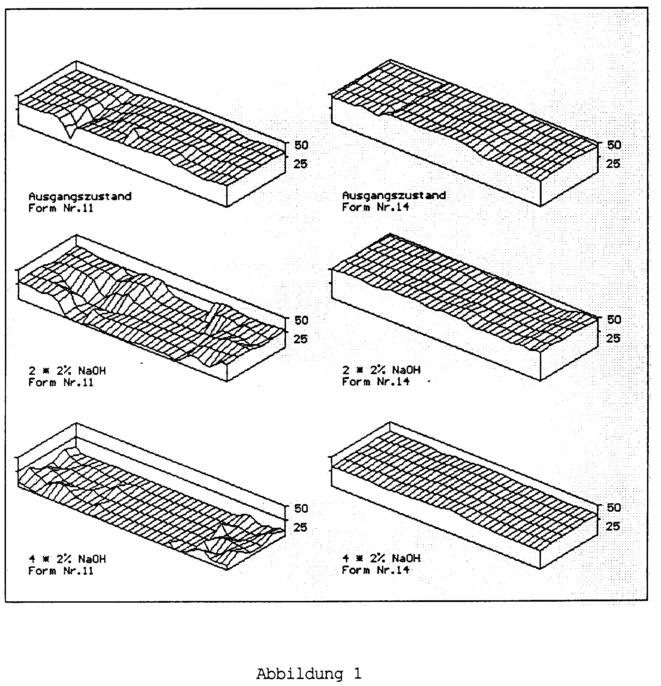

In Abbildung 1 ist die Schichtdicke der Zinn-IV-oxid-Schicht in CTU (Coating Thickness Unit) über dem gesamten abgerollten Flaschenmantel für die vergüteten Weißglasflaschen dargestellt. Die industrieübliche Einheit 1 CTU entspricht etwa 0,25 nm Schichtdicke.

In Abb. 1 ist links die Oberfläche einer ohne Primerschicht (nur MBTC) und rechts eine mit zusätzlicher Primerschicht versehene Weißglasflasche dargestellt. Die Oberfläche des gesamten Flaschenmantels ist in beiden Fällen gleichmäßig mit einer Zinn-IV-oxid-Schicht versehen.

Nach zweimaligem Waschen mit 2 %iger NaOH-Waschlauge bei 85 °C (praxisübliche Reinigungsbedingungen) zeigen sich bereits Unterschiede in den noch vorhandenen Schichthöhen der Zinn-IV-oxid-Schicht. Während auf der linken Abb. bereits ein deutlicher Schichtabtrag, bedingt durch die Schutzfunktion der Primerschicht, zu erkennen ist, ist dieser Schichtabtrag bei der mit der zusätzlichen Primerschicht geschützten Weißglasflasche noch kaum wahrnehmbar.

Nach viermaligem Waschen unter den gleichen Bedingungen ist der Unterschied im Abtragsverhalten der Zinn-IV-oxid-Schicht noch signifikanter. Links ist die ungeschützte, fast vollständig von der Zinn-IV-oxid-Schicht befreite Oberfläche zu erkennen. Auf der rechten Abb. ist noch eine deutliche Bedeckung der Glasoberfläche zu erkennen, als Folge der Primerschicht.

Die linke Bildspalte zeigt das Abtragsverhalten einer Zinn-IV-oxid-Heißendvergütungsschicht, die direkt auf die Glasoberfäche aufgebracht wurde. Bei der rechten Bildspalte wurde zusätzlich eine Primerschicht zwischen die Glasoberfläche und der Zinn-IV-oxid-Heißendvergütungschicht aufgebracht.

Die obere Bildreihe zeigt den Ausgangszustand der Zinn-IV-oxid-Schicht vor der Waschbelastung mit 2 %iger wäßriger NaOH, die mittlere und untere Bildreihe den Zustand nach zwei- bzw. viermaligem Waschen unter Praxisbedingungen.

**Patentansprüche**

1. Verfahren zur Heißendvergütung von Hohlglaskörpern, dadurch gekennzeichnet ist, daß man auf die zu beschichtende heiße Oberfläche

   - eine Lösung von Bor-, Silicium-, Zinn- und gegebenenfalls Phosphorverbindungen in Wasser und/oder organischen Lösungsmitteln aufbringt und daraus pyrolytisch eine Schicht aus Oxiden dieser Elemente erzeugt und gegebenenfalls

   - auf diese Schicht in an sich bekannter Weise weitere Schichten im Verfahren der Heißend- und/oder Kaltendvergütung aufbringt.

2. Verfahren gemäß Anspruch 1, dadurch gekennzeichnet, daß die erste Schicht in einer Dicke von 5 nm - 300 nm aufgebracht wird und bei Auftragung weiterer Schichten eine Gesamtschichtdicke von 10 nm bis 300 nm eingehalten wird.

**Claims**

1. Process for the hot end coating of glass hollowware, characterized in that

   - a solution of compounds of boron, silicon, tin and optionally phosphorus in water and/or organic solvents is applied to the hot surface to be coated, and a layer of oxides of these elements is formed therefrom pyrolytically, and optionally

- further layers are applied to this layer in a manner known per se by hot end coating and/or cold end coating.

2. Process according to Claim 1, characterized in that the first layer is applied in a thickness of 5 nm - 300 nm and, in the case of application of further layers, a total layer thickness or from 10 nm to 300 nm is observed.

**Revendications**

1. Procédé de traitement à chaud d'articles creux en verre, caractérisé en ce que, sur la surface chaude à revêtir :

on applique une solution de composés du bore, du silicium, de l'étain et éventuellement du phosphore, dans de l'eau et/ou dans des solvants organiques, et on les convertit pyrolytiquement en une couche d'oxydes de ces éléments, et éventuellement
on applique sur cette couche, d'une façon connue en soi, d'autres couches par traitement à chaud et/ou traitement à froid.

2. Procédé selon la revendication 1, caractérisé en ce que la première couche appliquée a une épaisseur de 5 nm - 300 nm et en ce que l'on respecte, lors de l'application d'autres couches, une épaisseur totale de 10 nm à 300 nm.

Abbildung 1